# FASCICULE DE BREVET EUROPEEN

(11) **EP 1 231 101 B1**
(45) Date de publication et mention de la délivrance du brevet: **08.12.2004**
(21) Numéro de dépôt: 02290326.4
(22) Date de dépôt: 11.02.2002
(51) Int. Cl.: B60N 2/30, B60N 2/36

(54) **Siège escamotable**
Klappsitz
Collapsible seat

(30) Priorité: 12.02.2001 FR 0101868
(43) Date de publication de la demande: 14.08.2002
(73) Titulaire: Peugeot Citroen Automobiles, 92200 Neuilly Sur Seine (FR)
(72) Inventeur: Riga, Alessandro, 75015 Paris (FR)
(74) Mandataire: de Lambilly Delorme, Marie Pierre

(56) Documents cités:
- EP-A- 0 972 672
- DE-C- 19 943 891
- FR-A- 2 604 958
- FR-A- 2 677 601
- US-A- 4 708 387

## Description

L'invention concerne les sièges automobiles. Les utilisateurs souhaitent de plus en plus avoir des véhicules polyvalents qui permettent de transporter le maximum de personnes et/ou le maximum de bagages dans un espace assez restreint.

C'est pourquoi les constructeurs automobiles proposent des véhicules où les sièges sont escamotables de façon à libérer le maximum de place quand il n'y a pas de passagers (cf. par exemple FR-A-2 604 958, correspondant au préambule de la revendication indépendante).

Mais souvent ces systèmes ne permettent pas d'avoir un plancher plat

Il existe aussi des sièges démontables, mais les utilisateurs sont obligés de les stocker à l'extérieur du véhicule et ils ne peuvent alors plus les utiliser s'ils sont en voyage.

Selon l'invention, qui est définie dans la revendication indépendante, le siège ou la banquette est toujours disponible et il permet à la fois d'avoir un plancher plat quand le siège est rangé.

Le siège selon l'invention est escamotable, le dossier bascule en arrière jusqu'à une position horizontale et les pieds effectuent une rotation qui amène l'assise au niveau du plancher. Dans cette position le siège est complètement plat et s'aplatit sur le plancher qui peut éventuellement comporter un creux au droit du siège afin que celui vienne s'intégrer dans le plancher laissant celui-ci complètement plat.

On peut prévoir un plancher coulissant qui couvre le siège quand il est rangé et qui occulte l'espace dégagé quand le siège est en position d'utilisation.

Selon une caractéristique particulière de l'invention la rotation des pieds s'effectue sur les cotés de l'assise. Le haut des pieds est articulé sur les cotés latéraux de l'assise.

Selon une caractéristique particulière de l'invention les pieds coopèrent avec un moyen de guidage situé sur le plancher. Le bas des pieds effectuent un glissement parallèle à l'assise qui entraîne l'assise vers le plancher.

Selon une deuxième variante de l'invention la rotation s'effectue au plancher. Le bas des pieds est articulé avec le plancher et le haut des pieds effectue une rotation vers l'extérieur et entraîne l'assise vers le plancher.

Selon une caractéristique de la deuxième variante l'assise coopère avec des moyens de guidage disposés dans les pieds. Lors de l'écartement des pieds l'assise glisse grâce aux moyens de guidage le long des pieds du haut vers le bas de ceux-ci.

Selon une caractéristique particulière de l'invention les moyens de guidage sont des rails. L'assise comporte des ergots ou des roues qui glissent dans lesdits rails dans le cas de la deuxième variante où les pieds sont articulés au plancher.

Selon une caractéristique particulière de l'invention chaque pied est équipé d'au moins une roue qui coulisse dans chacun des rails. Dans le cas de la première variante où les pieds sont articulés à l'assise, le bas des pieds comportent des roues qui coulissent dans chaque rail.

Selon une caractéristique particulière de l'invention le plancher intègre un évidement disposé au droit du bord de l'assise. Ainsi l'utilisateur peut saisir le coté de l'assise pour le soulever lorsqu'il souhaite remettre le siège en position d'utilisation.

Selon une troisième variante de l'invention le dossier est rappelé en position verticale par un moyen de rappel élastique. L'utilisateur n'a ainsi pas d'effort à fournir pour relever le dossier.

Selon une caractéristique particulière de l'invention le dossier est maintenu dans toutes les positions, y compris les positions intermédiaires entre la verticale et l'horizontale, par au moins une roue dentée disposée à l'arrière de l'assise qui coopère avec au moins un doigt commandé disposé sur le dossier. L'utilisateur peut ainsi choisir l'inclinaison du dossier qui lui convient entre la position complètement horizontale et la position verticale.

Selon une caractéristique particulière de l'invention le doigt est commandé par au moins un bouton de commande disposé sur le coté du dossier. Il suffit d'actionner le bouton pour dégager le doigt des dents de la roue.

Selon une quatrième variante de l'invention le dossier est maintenu en position verticale par deux oreillettes disposées de chaque coté du dossier et qui coopérant avec les bords de l'assise. La fixation des oreillettes aux cotés de l'assise assure la fixation du dossier dans une position verticale ou quasi verticale selon la forme qui aura été donnée aux oreillettes. On peut prévoit plusieurs type d'oreillette suivant l'inclinaison choisie.

Selon une caractéristique particulière de la quatrième variante les oreillettes sont équipées de crochets qui s'engagent sur les cotés de l'assise. L'extrémité de chaque oreillette comporte un crochet qui se fixe sur chaque coté de l'assise.

Selon une caractéristique particulière de la quatrième variante les oreillettes sont articulées avec l'assise. Les oreillettes sont fixées sur chaque coté du dossier.

On peut également envisager que les pieds forment un triangle. Les pieds s'écartent en tournant chacun vers l'extérieur et en glissant chacun sur un rail de guidage. Dans ce cas, un évidement est prévu sous l'assise pour ranger les pieds afin que l'ensemble soit bien plat. Il peut également être envisagé que le rail soit suffisamment large pour recevoir les pieds.

L'invention sera mieux comprise à la lecture de la description qui va suivre donnée uniquement à titre d'exemple et faite en se référant aux dessins annexés dans lesquels:

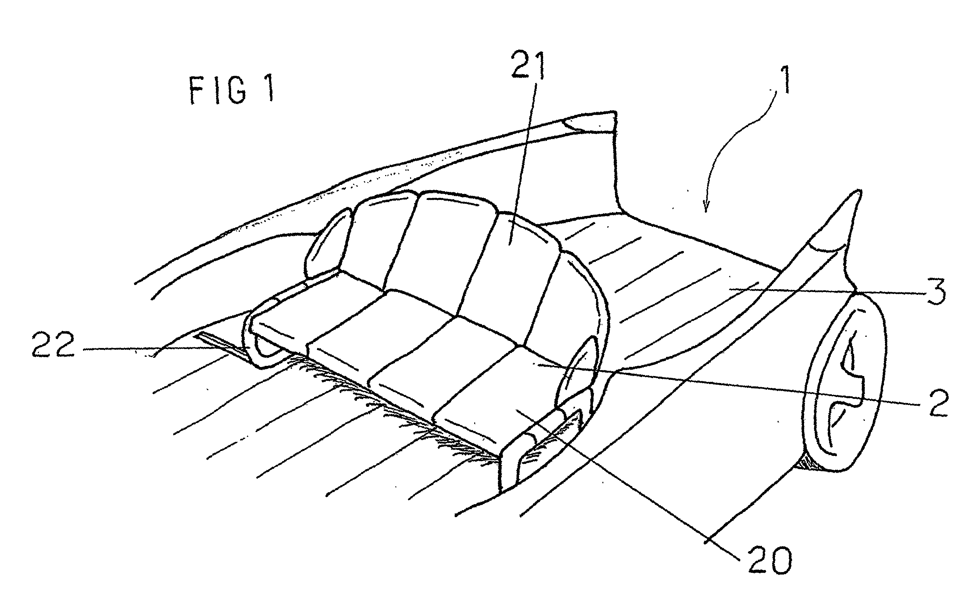

- la figure 1 est une vue en perspective du siège en position en position d'utilisation,
- la figure 2 est une vue en perspective du siège en position rangée,
- la figure 3 est une vue détaillée d'un pied du siège selon une première variante,
- la figure 4 est une vue de coté de la première variante, siège rangé,
- la figure 5 est une vue détaillée du coté du siège selon une seconde variante,
- la figure 6 est une vue détaillée du coté du siège selon une troisième variante,
- la figure 7 est une vue détaillée du dossier selon la troisième variante,
- la figure 8 est une vue détaillée du coté du siège selon une quatrième variante.

Le véhicule 1 est équipé du siège 2 disposé sur le plancher 3. Ce siège comporte une assise 20, un dossier 21 et des pieds 22 placés de chaque coté de l'assise 20. Le dossier 21 est articulé avec l'assise 20.

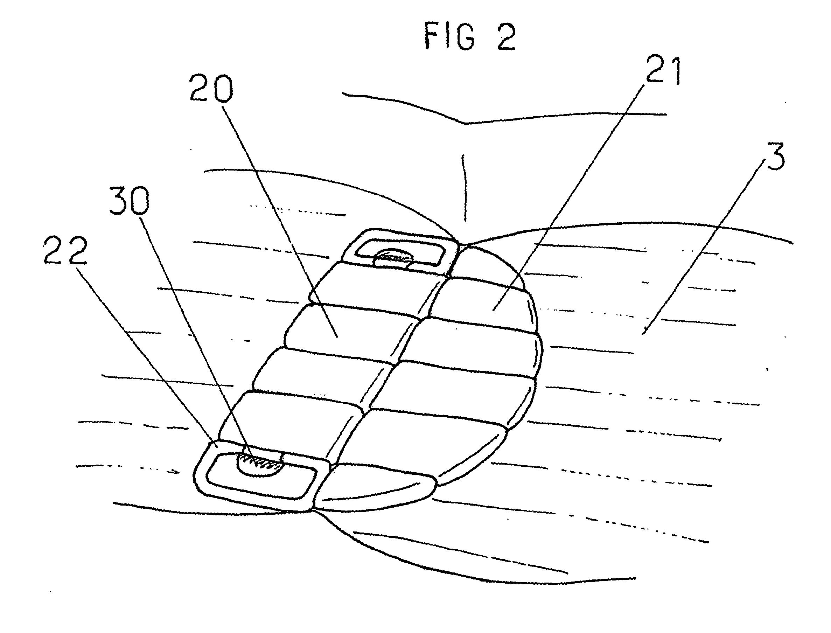

Lorsque le siège est complètement rangé comme on peut le voir à la figure 2, l'assise 20, le dossier 21 et les pieds 22 sont tous placés dans le même plan.

Un évidement 30 est prévu dans le plancher 3 au droit de chaque coté de l'assise 20 afin de la saisir quand l'utilisateur souhaite changer la position du siège 2.

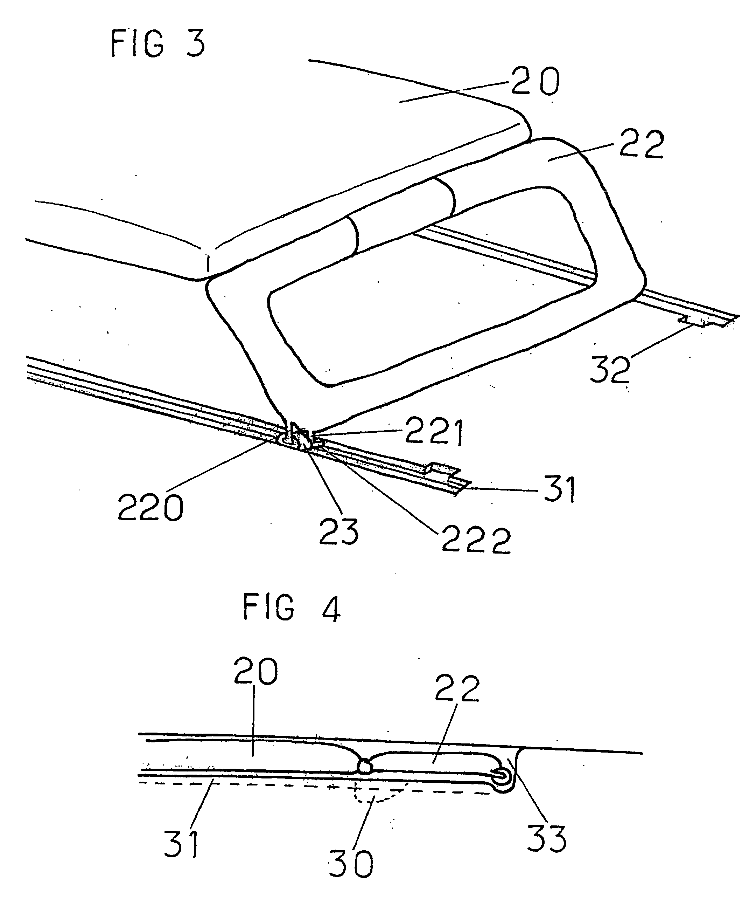

Selon une première variante que l'on peut voir à la figure 3, le haut de chaque pied 22 est articulé au bord de l'assise 20 tandis que la partie basse est équipée d'au moins une roue 23. Chacune de ces dites roues 23 circule dans un rail 31.

Chaque roue est reliée au pied correspondant par deux bras 220 et 221. Le bras 221 disposé à l'intérieur comporte un guide 222 qui coulisse dans le rail 31. Un évidement 32 est prévu en bout de rail 31 afin de pouvoir déposer le siège 2 si on le souhaite.

Il serait possible de faire coulisser chaque pied 22 sur le rail 31 avec uniquement le guide 222 sans les roues.

Un évidement 33 est prévu pour intégrer le siège 2 au plancher 3 (cf. figure 4).

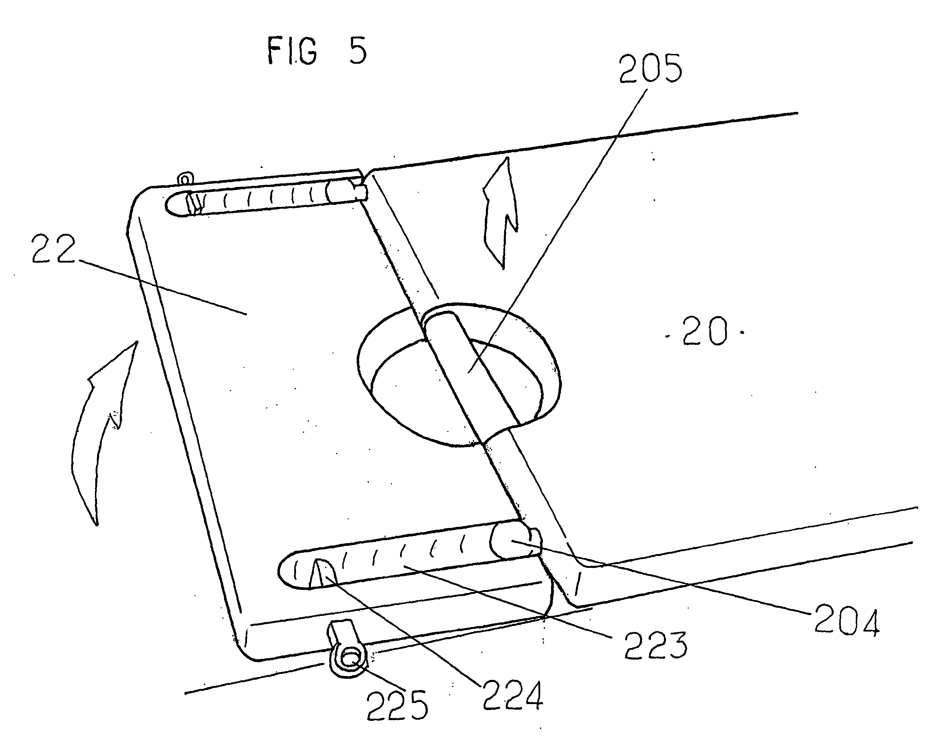

Selon une deuxième variante comme on le voit à la figure 5, les pieds 22 sont articulés en partie basse sur le plancher 3. L'assise 20 coulisse dans des rails 223 placés sur chaque pied 22. Le système de coulissement peut être semblable à celui de la première variante. Ou comme représenté à la figure 5, l'assise 20 peut comporter des ergots 204 de forme sphérique qui coulissent chacun dans des rails cylindriques 223.

Lorsque l'on veut mettre le siège 2 en position d'utilisation, il suffit de tirer vers le haut le coté de l'assise 20 où est éventuellement disposé une poignée 205. La traction de l'assise 20 vers le haut provoque la rotation et le redressement des pieds 22 tandis que les ergots 204 coulissent dans les rails 223.

Pour maintenir l'assise 20 en position haute des butées 224 disposées de chaque coté des pieds 22 et traversant les rails 223 bloquent les ergots 204 en haut des pieds 22. Ces butées 224 sont maintenues en position par des moyens de retenue élastiques tel que des ressorts (non représentés).

L'utilisateur souhaitant escamoter le siège 2 n' a plus qu'à tirer sur les poignées 225 placées sur chaque butée pour libérer les ergots 204 et appuyer sur l'assise 20 pour la faire redescendre.

Le basculement des pieds 22 provoque leur écartement mutuel et fait glisser l'assise 20 vers le bas. Une fois tous les pieds 22 basculés l'assise 20 atteint le plancher 3.

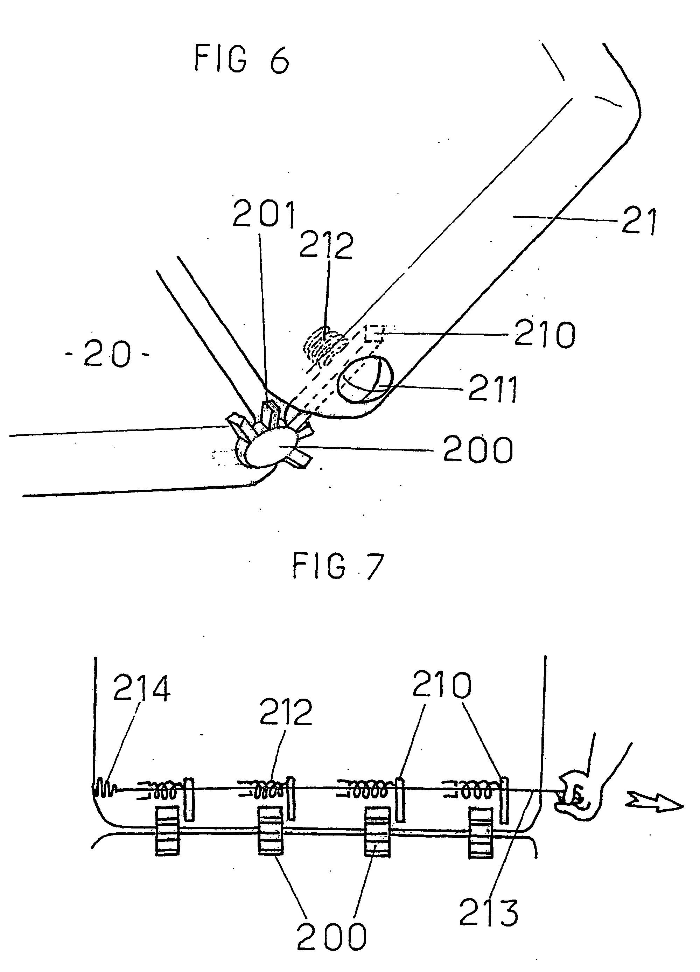

Selon une troisième variante (figure 6), le dossier 21 coopère avec l'assise 20 par l'intermédiaire d'une roue dentée 200 et d'un doigt 210. La roue dentée 200 est solidaire de l'assise 20. Le doigt 210 est placé dans le dossier 21. La position du doigt 210 sur la roue dentée 200 donne l'inclinaison du dossier 21.

Pour positionner le dossier il suffit d'actionner le doigt 210 par l'intermédiaire d'un bouton de commande 211. Une pression sur ce bouton 211 permet le déplacement du doigt 210 perpendiculairement aux dents 201 de la roue dentée 200 dégageant ainsi le doigt 210 des dents entre lesquelles il était coincé.

L'utilisateur n'a plus qu'à basculer ou redresser le dossier 21 et le doigt 210 est ramené dans sa position initiale entre deux autres dents 201 grâce à un moyen de rappel comme un ressort 212 correspondant à une autre position du dossier 21.

Plusieurs solutions sont possibles:
- soit prévoir un bouton 211 de commande de chaque coté de l'assise, chacun étant indépendant,
- soit prévoir un système de commande comme on peut le voir sur la figure 7 où l'utilisateur actionne le bouton 211 constitué d'une tige 213 fixé au dossier 21 et comportant un ressort de rappel 214 et sur laquelle sont placés au moins deux doigts 210.
La traction sur le bouton 211 décale les doigts 210 des dents 201 et il suffit de relâcher le bouton 211 pour que les doigts reprennent leur place entre deux autres dents 201 en fonction de l'inclinaison choisie.

On peut également prévoir que le dossier 21 soit ramené en position verticale par un ressort (non représenté) disposé sur l'articulation entre l'assise 20 et le dossier 21. Dans ce cas l'utilisateur n'a plus qu'à appuyer sur le dossier pour choisir sa position.

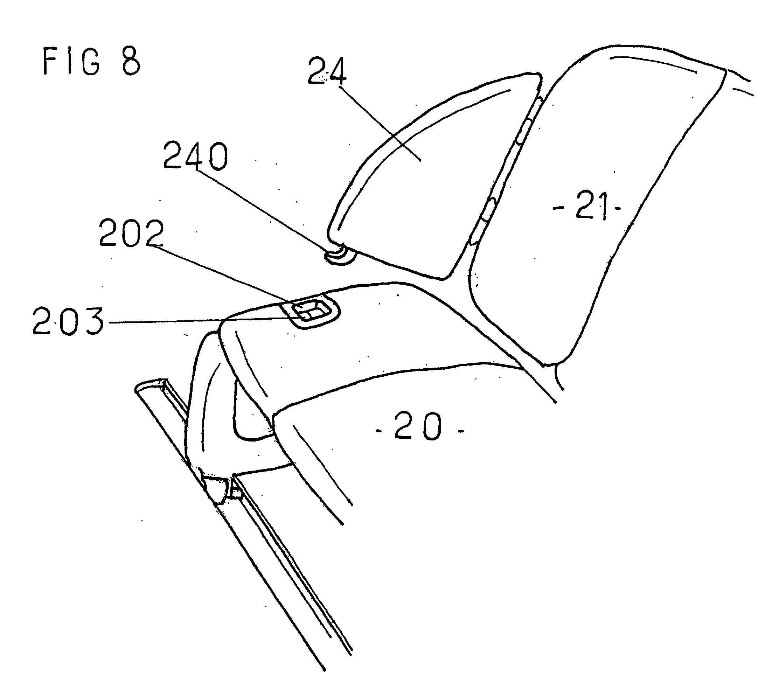

Selon une quatrième variante (cf. figure 8) le dossier 21 est maintenu en position verticale par au moins une oreillette 24 placée sur le coté du dossier 21. Cette oreillette est articulée sur le dossier 21 et comporte un crochet 240 ou tout autre moyen de fixation.

Pour fixer le dossier 21 en position verticale il suffit de remonter de dossier 21, de rabattre vers l'avant l'oreillette 24 et d'engager le crochet 240 dans l'orifice 202 placé dans l'assise 20 et comportant un anneau de fixation 203 prévu à cet effet. Pour dégager le dossier 21, on effectue la démarche inverse.

On peut prévoir plusieurs crochets 240 pour incliner plus ou moins le dossier 21.

On peut également prévoir plusieurs formes d'oreillette 24 pour varier la position du dossier.

## Revendications

1. Siège de véhicule automobile escamotable comportant un dossier (21), une assise (20) et des pieds (22) destinés à être reliés au plancher (3) du véhicule **caractérisé en ce que** le dossier (21) bascule en arrière jusqu'à une position horizontale et que les pieds (22) effectuent une rotation qui amène l'assise (20), avec le dossier (21) dans ladite position horizontale, au niveau du plancher (3), permettant d'avoir un plancher (3) plat quand le siège est rangé.

2. Siège automobile escamotable selon la revendication 1 **caractérisé en ce que** la rotation des pieds (22) s'effectue sur les cotés de l'assise (20).

3. Siège automobile escamotable selon la revendication 2 **caractérisé en ce que** les pieds (22) coopèrent avec un moyen de guidage (31) situé sur le plancher (3).

4. Siège automobile escamotable selon la revendication 1 **caractérisé en ce que** la rotation s'effectue au plancher (3).

5. Siège automobile escamotable selon la revendication 4 **caractérisé en ce que** l'assise (20) coopère avec des moyens de guidage (223) disposés dans les pieds (22).

6. Siège automobile escamotable selon la revendication 3 ou 5 **caractérisé en ce que** les moyens de guidage sont des rails (31; 223).

7. Siège automobile escamotable selon la revendication 6 **caractérisé en ce que** chaque pied (22) est équipé d'au moins une roue (23) qui coulisse dans chacun des rails (31).

8. Siège automobile escamotable selon une des revendications précédentes **caractérisé en ce que** le plancher (3) intègre un évidement (30) disposé au droit du bord de l'assise (20).

9. Siège automobile escamotable selon une des revendications précédentes **caractérisé en ce que** le dossier (21) est rappelé en position verticale par un moyen de rappel élastique.

10. Siège automobile escamotable selon une des revendications précédentes **caractérisé en ce que** le dossier (21) est maintenu dans les positions intermédiaires entre la verticale et l'horizontale par au moins une roue dentée (200) disposée à l'arrière de l'assise (20) qui coopère avec au moins un doigt (210) commandé disposé sur le dossier (21).

11. Siège automobile escamotable selon une des revendications 10 **caractérisé en ce que** le doigt (210) est commandé par au moins un bouton de commande (211) disposé sur le coté du dossier (21).

12. Siège automobile escamotable selon une des revendications 1 à 8 **caractérisé en ce que** le dossier (21) est maintenu en position verticale par deux oreillettes (24) disposées de chaque coté dudit dossier (21) et qui coopérant avec les bords de l'assise (20, 202).

13. Siège automobile escamotable selon la revendication 12 **caractérisé en ce que** les oreillettes (24) sont équipées de crochets (240) qui s'engagent sur les cotés de l'assise (20,202).

14. Siège automobile escamotable selon une des revendications 12 ou 13 **caractérisé en ce que** les oreillettes (24) sont articulées avec l'assise (20).

## Patentansprüche

1. Klappsitz für ein Kraftfahrzeug mit einer Rückenlehne (21), einer Sitzfläche (20) und Füßen (22), die mit dem Boden (3) des Fahrzeugs verbunden sind, **dadurch gekennzeichnet, dass** die Rükkenlehne (21) bis in eine horizontale Position nach hinten kippt und die Füße (22) eine Drehung ausführen, welche die Sitzfläche (20) mit der Rückenlehne (21) in die horizontale Position am Boden (3) führt, wodurch ein flacher Boden (3) möglich ist, wenn der Sitz verstaut ist.

2. Klappsitz für ein Kraftfahrzeug nach Anspruch 1, **dadurch gekennzeichnet, dass** die Drehung der Füße (22) an den Seiten der Sitzfläche (20) erfolgt.

3. Klappsitz für ein Kraftfahrzeug nach Anspruch 2, **dadurch gekennzeichnet, dass** die Füße (22) mit einem Führmittel (31) zusammenwirken, das am Boden (3) angeordnet ist.

4. Klappsitz für ein Kraftfahrzeug nach Anspruch 1, **dadurch gekennzeichnet, dass** die Drehung auf dem Boden (3) erfolgt.

5. Klappsitz für ein Kraftfahrzeug nach Anspruch 4, **dadurch gekennzeichnet, dass** die Sitzfläche (20) mit in den Füßen (22) angeordneten Führmitteln (223) zusammenwirkt.

6. Klappsitz für ein Kraftfahrzeug nach Anspruch 3 oder 5, **dadurch gekennzeichnet, dass** die Führmittel Schienen (31; 223) sind.

7. Klappsitz für ein Kraftfahrzeug nach Anspruch 6, **dadurch gekennzeichnet, dass** jeder Fuß (22) mit mindestens einem Rad (23) versehen ist, das in den Schienen (31) gleitet.

8. Klappsitz für ein Kraftfahrzeug nach einem der vorhergehenden Ansprüche, **dadurch gekennzeichnet, dass** der Boden (3) senkrecht zum Rand der Sitzfläche (20) eine Aussparung (30) aufweist.

9. Klappsitz für ein Kraftfahrzeug nach einem der vorhergehenden Ansprüche, **dadurch gekennzeichnet, dass** die Rückenlehne (21) von einem elastischen Rückstellmittel in die vertikale Position zurückgeführt wird.

10. Klappsitz für ein Kraftfahrzeug nach einem der vorhergehenden Ansprüche, **dadurch gekennzeichnet, dass** die Rückenlehne (21) in den Positionen zwischen Vertikale und Horizontale von mindestens einem Zahnrad (200) gehalten wird, das hinter der Sitzfläche (20) angeordnet ist und mit mindestens einem an der Rükkenlehne (21) angeordneten gesteuerten Finger (210) zusammenwirkt.

11. Klappsitz für ein Kraftfahrzeug nach Anspruch 10, **dadurch gekennzeichnet, dass** der Finger (210) von mindestens einem Steuerknopf (211) gesteuert wird, der an der Seite der Rückenlehne (21) angeordnet ist.

12. Klappsitz für ein Kraftfahrzeug nach einem der Ansprüche 1 bis 8, **dadurch gekennzeichnet, dass** die Rückenlehne (21) von zwei Flügeln (24) in vertikaler Position gehalten wird, die auf beiden Seiten der Rückenlehne (21) angeordnet sind und mit den Rändern der Sitzfläche (20, 202) zusammenwirken.

13. Klappsitz für ein Kraftfahrzeug nach Anspruch 12, **dadurch gekennzeichnet, dass** die Flügel (24) mit Haken (240) versehen sind, die sich in die Seiten der Sitzfläche (20, 202) einfügen.

14. Klappsitz für ein Kraftfahrzeug nach einem der Ansprüche 12 oder 13, **dadurch gekennzeichnet, dass** die Flügel (24) an der Sitzfläche (20) angelenkt sind.

## Claims

1. Collapsible motor vehicle seat comprising a seat back (21), a seat base (20) and feet (22) intended to be connected to the floor (3) of the vehicle, **characterised in that** the seat back (21) tilts backwards to a horizontal position and that the feet (22) perform a rotation that brings the seat base (20), together with the seat back (21), into said horizontal position, level with the floor (3), making it possible to have a flat floor (3) when the seat is stored.

2. Collapsible automotive seat according to Claim 1 **characterised in that** the rotation of the feet (22) is carried out at the sides of the seat base (20).

3. Collapsible automotive seat according to Claim 2 **characterised in that** the feet (22) co-operate with a guidance means (31) located on the floor (3).

4. Collapsible automotive seat according to Claim 1 **characterised in that** rotation is carried out on the floor (3).

5. Collapsible automotive seat according to Claim 4 **characterised in that** the seat base (20) co-operates with guidance means (223) arranged within the feet (22).

6. Collapsible automotive seat according to Claim 3 or 5 **characterised in that** the guidance means are rails (31; 223).

7. Collapsible automotive seat according to Claim 6 **characterised in that** each foot (22) is equipped with at least one wheel (23) that slides in each of the rails (31).

8. Collapsible automotive seat according to one of the preceding claims **characterised in that** the floor (3) incorporates a recess (30) arranged in line with the edge of the seat base (20).

9. Collapsible automotive seat according to one of the preceding claims **characterised in that** the seat back (21) is returned to the vertical position by a resilient return means.

10. Collapsible automotive seat according to one of the preceding claims **characterised in that** the seat back (21) is maintained in the intermediate positions between the vertical and horizontal by at least one toothed wheel (200) arranged behind the seat base (20), which co-operates with at least one controlled finger (210) arranged on the seat back (21).

11. Collapsible automotive seat according to one of Claims 10 **characterised in that** the finger (210) is controlled by at least one control knob (211) arranged on the side of the seat back (21).

12. Collapsible automotive seat according to one of Claims 1 to 8 **characterised in that** the seat back (21) is maintained in the vertical position by two earpieces (24) arranged on either side of said seat back (21), and which co-operate with the edges of the seat base (20, 202).

13. Collapsible automotive seat according to Claim 12 **characterised in that** the earpieces (24) are equipped with hooks (240) that engage on the sides of the seat base (20, 202).

14. Collapsible automotive seat according to one of Claims 12 or 13 **characterised in that** the earpieces (24) are articulated with the seat base (20).
